(19) **Europäisches Patentamt European Patent Office Office européen des brevets**

(11) **EP 1 758 029 B1**

(12) **FASCICULE DE BREVET EUROPEEN**

(45) Date de publication et mention
de la délivrance du brevet:
**30.09.2009 Bulletin 2009/40**

(51) Int Cl.:
**G06F 13/40** *(2006.01)*

(21) Numéro de dépôt: **06014467.2**

(22) Date de dépôt: **12.07.2006**

(54) **Périphérique USB sécurisé**

Gesichertes USB-Peripheriegerät

Secure USB peripheral

(84) Etats contractants désignés:
**DE FR GB IT**

(30) Priorité: **19.08.2005 FR 0508645**

(43) Date de publication de la demande:
**28.02.2007 Bulletin 2007/09**

(73) Titulaire: **STMicroelectronics SA**
**92120 Montrouge (FR)**

(72) Inventeurs:
• **Duval, Benjamin**
**83470 Saint Maximin (FR)**

• **Pomet, Alain**
**13790 Rousset (FR)**

(74) Mandataire: **Marchand, André**
**OMNIPAT,**
**24 Place des Martyrs de la Résistance**
**13100 Aix-en-Provence (FR)**

(56) Documents cités:
**US-A1- 2002 129 180     US-A1- 2002 169 915**

• **"Universal Serial Bus Specification 2.0 (Chapter 7)" UNIVERSAL SERIAL BUS SPECIFICATION, XX, XX, 27 avril 2000 (2000-04-27), pages 119-194, XP002348936**

## Description

La présente invention concerne les périphériques comportant un port série pour se connecter par l'intermédiaire d'une liaison série à un dispositif maître, tel qu'un ordinateur ou un concentrateur (hub).

La présente invention concerne plus particulièrement les périphériques comprenant un port série de type USB (Universal Serial Bus), pour se connecter à un dispositif maître.

Un port série de type USB comporte quatre bornes de connexion, à savoir deux bornes de transmission différentielle de données, et deux bornes d'alimentation positive et négative permettant d'alimenter le périphérique en courant continu.

Habituellement, un dispositif maître comporte des moyens pour détecter la connexion et la déconnexion d'un dispositif périphérique de type USE. Cette fonction de détection n'existe pas du côté d'un périphérique de type USB. Or, un périphérique peut être connecté à un dispositif maître avec l'une et/ou l'autre des liaisons de transmission défaillante, de sorte que le périphérique est alimenté par la liaison USB, mais ne peut pas communiquer avec le dispositif maître. S'il s'agit d'un périphérique sécurisé, comme les cartes à microprocesseur mémorisant des informations secrètes, des fraudeurs peuvent tenter de découvrir ces informations secrètes en mettant la carte sous tension et en effectuant des mesures sur les bornes de transmission de données.

Il est donc souhaitable de pouvoir adapter le mode de fonctionnement du périphérique selon qu'il est connecté ou non à un dispositif maître, et en particulier de déterminer si le périphérique peut communiquer par la liaison série en toute sécurité.

La détection par un périphérique d'un dispositif maître connecté au périphérique par une liaison USB soulève toutefois de nombreux problèmes.

Tout d'abord, la norme USB version 2.0 prévoit trois vitesses de transmission de données, à savoir une vitesse lente (Low Speed) à 1,2 Mb/s, une vitesse moyenne (Full Speed) à 12 Mb/s et une vitesse haute (High Speed) à 480 Mb/s. La détection d'un dispositif maître doit pouvoir fonctionner quelle que soit la vitesse de transmission employée par le périphérique. Or selon la norme USB, la sélection de l'une de ces vitesses de transmission est effectuée par le dispositif maître en fonction de caractéristiques du port série du périphérique. En particulier, un périphérique de type USB comprend une résistance de polarisation à l'état haut (pull-up resistor) connectable à l'une ou l'autre des bornes de transmission de données du port USB, selon la vitesse de transmission supportée par le périphérique. Cette vitesse est déterminée par le dispositif maître en détectant si l'une ou l'autre des bornes de transmission de donnée positive ou négative est connectée à cette résistance. Si cette résistance est connectée à la borne de transmission positive, le port USB du périphérique fonctionne à vitesse moyenne. Si cette résistance est connectée à la borne de transmission négative, le port USB du périphérique fonctionne à vitesse moyenne. Enfin, si cette résistance n'est connectée à aucune des bornes de transmission, le périphérique fonctionne à vitesse haute.

Ensuite, la norme USB impose des niveaux de tension sur les bornes de transmission de données. En particulier, la tension ne doit pas dépasser 0,8 Volt simultanément sur les deux bornes de transmission de donnée.

La présente invention a pour but de surmonter ces problèmes et de permettre à un périphérique de détecter la présence d'un dispositif maître avec lequel il est connecté par une liaison série.

Le document US2002/0169915 décrit un dispositif susceptible de se connecter par une liaison USB en mode maître ou esclave en fonction du type maître ou esclave d'un autre dispositif avec lequel il est connecté. A cet effet, le dispositif mesure un courant ou une tension avant et après l'établissement de la liaison USB, pour déterminer la présence d'une résistance "pull-down" révélant la présence d'un dispositif maître sur la liaison USB, ou d'une impédance "pull-up" révélant la présence d'un dispositif esclave sur cette liaison.

L'objectif de la présente invention est atteint par la prévision d'un dispositif comprenant un port série pour se connecter en tant qu'esclave à un dispositif maître par l'intermédiaire d'une liaison série. Selon l'invention le dispositif comprend un circuit de détection pour détecter la présence d'une impédance d'un dispositif maître, reliée à une borne du port série.

Selon un mode de réalisation de l'invention, l'impédance détectée par le circuit de détection est une résistance de polarisation à l'état bas.

Selon un mode de réalisation de l'invention, l'impédance détectée par le circuit de détection est une résistance ayant une valeur comprise dans une plage de valeurs.

Selon un mode de réalisation de l'invention, le circuit de détection comprend un étage de polarisation pour générer une tension de mesure sur la borne du port série, et un étage de détection comprenant au moins un comparateur pour comparer la tension de mesure à une tension de référence.

Selon un mode de réalisation de l'invention, l'étage de détection comprend deux comparateurs pour comparer la tension de mesure à une tension de référence haute et à une tension de référence basse, et des moyens pour générer un signal de détection indiquant si la tension de mesure est ou non comprise entre les tensions de référence haute et basse.

Selon un mode de réalisation de l'invention, le circuit de détection comprend un premier étage de détection d'une première résistance de polarisation à l'état bas d'un dispositif maître, reliée à une première borne du port série, et un second étage de détection d'une seconde résistance de polarisation à l'état bas du dispositif maître, reliée à une seconde borne du port série.

Selon un mode de réalisation de l'invention, le circuit de détection comprend un étage de polarisation pour générer une première tension de mesure sur la première borne du port série, et une seconde tension de mesure sur la seconde borne du port série, chaque étage de détection comprenant au moins un comparateur pour comparer la tension de mesure à une tension de référence.

Selon un mode de réalisation de l'invention, chaque tension de mesure est inférieure à 0,8 Volt, même en l'absence de résistances de polarisation à l'état bas d'un dispositif maître, connectées aux bornes du port série.

Selon un mode de réalisation de l'invention, le circuit de détection comprend des moyens pour générer un signal de détection indiquant si les deux étages de détection détectent ou non la présence d'une résistance de polarisation à l'état bas ayant une valeur comprise dans une plage de valeurs.

Selon un mode de réalisation de l'invention, chaque étage de détection comprend deux comparateurs pour comparer la tension de mesure à une tension de référence haute et à une tension de référence basse, et des moyens pour générer un signal de détection indiquant si la tension de mesure est ou non comprise entre les tensions de référence haute et basse.

Selon un mode de réalisation de l'invention, les première et seconde bornes du port série sont dédiées à la transmission de données sous forme différentielle.

Selon un mode de réalisation de l'invention, le circuit de détection est alimenté par l'intermédiaire de bornes du port série.

Selon un mode de réalisation de l'invention, le circuit de détection est désactivé à la suite de la détection d'un dispositif maître, et avant l'établissement d'une communication par la liaison série.

Selon un mode de réalisation de l'invention, le port série est de type Universal Serial Bus.

Selon un mode de réalisation de l'invention, le dispositif est un circuit intégré.

Ces objets, caractéristiques et avantages ainsi que d'autres de la présente invention seront exposés plus en détail dans la description suivante de l'invention faite à titre non limitatif en relation avec les figures jointes parmi lesquelles :

- la figure 1 représente sous la forme de blocs un dispositif maître connecté à un périphérique par une liaison USB en vitesse moyenne ;
- la figure 2 représente sous la forme de blocs un dispositif maître connecté à un périphérique par une liaison USB en vitesse lente ;
- la figure 3 représente sous la forme de blocs un circuit d'interface d'un port USB d'un périphérique équipé d'un circuit de détection d'un dispositif maître, selon l'invention ;
- la figure 4 représente un mode de réalisation d'un circuit de détection selon l'invention ;
- la figure 5 est un organigramme d'une procédure de démarrage exécutée par un périphérique équipé d'un circuit de détection selon l'invention.

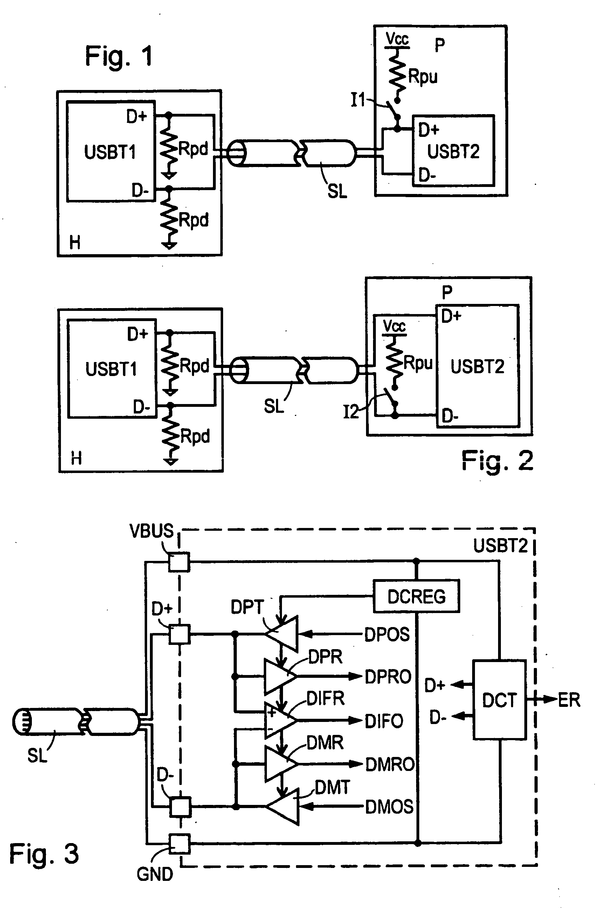

Les figures 1 et 2 représentent un dispositif maître H constitué par un ordinateur ou un concentrateur (hub), connecté par une liaison série SL de type USB à un dispositif esclave ou périphérique P. Le dispositif maître H comprend un circuit d'interface USBT1 connecté à un port série comportant deux bornes de transmission de données positive et négative D+, D-. Les bornes D+ et D-sont connectées chacune à une ligne de transmission différentielle de données de la liaison série SL. Le dispositif maître comprend deux résistances de polarisation à l'état bas (pull-down resistor) Rpd. Chacune de ces résistances relie une borne de donnée D+, D- respective du port série à la masse.

Le périphérique P comprend également un circuit d'interface USBT2 connecté à un port série comportant deux bornes D+, D- connectées aux lignes de transmission de données de la liaison série SL.

La figure 1 illustre le cas où la transmission entre le dispositif maître H et le périphérique P est effectuée en vitesse moyenne (full speed). Dans ce cas, la borne de transmission de données positive D+ du périphérique P est reliée au potentiel d'alimentation Vcc fourni par la liaison USB, par l'intermédiaire d'une résistance de polarisation à l'état haut (pull-up resistor) Rpu montée en série avec un interrupteur I1.

La figure 2 illustre le cas où la liaison USB SL entre le dispositif maître H et le périphérique P est à basse vitesse (low speed). Dans ce cas, la résistance de polarisation à l'état haut Rpu connectée à la tension d'alimentation Vcc est reliée par l'intermédiaire d'un interrupteur 12 à la borne de transmission de données négative D-.

La figure 3 représente le circuit d'interface USBT2 du périphérique P. La figure 3 montre les quatre bornes de connexion du port série USB du périphérique. Ces quatre bornes comprennent deux bornes positive et négative VBUS, GND d'alimentation en courant continu à environ 3,3 Volt, et les deux bornes de transmission différentielle de donnée D+, D- décrites ci-avant et représentées sur les figures 1 et 2. Le circuit USBT2 comprend des mémoires tampon d'émission DPT, DMT, des récepteurs asymétriques (single-ended receiver) DPR, DMR, et un récepteur différentiel DIFR. La borne de transmission de donnée positive D+ est connectée à la sortie de la mémoire tampon d'émission DPT, à l'entrée du récepteur DPR, et à une entrée positive du récepteur différentiel DIFR. La borne de transmission de donnée négative D- est connectée à la sortie de la mémoire tampon d'émission DMT, à l'entrée du récepteur DMR, et à une entrée négative du récepteur différentiel DIFR. Les bornes d'alimentation VBUS et GND alimentent un régulateur de tension continue DCREG. Le régulateur DCREG fournit une tension d'alimentation de 3 Volts aux récepteurs DPR, DIFR, DMR et aux mémoires tampon d'émission DPT, DMT. Les récepteurs DPR, DIFR, DMR fournissent respectivement des signaux de donnée DPRO, DIFO et DMRO transportant les données transmises par la liaison SL. Les mémoires tampons d'émission DPT, DMT reçoivent du périphérique P des signaux DPOS, DMOS de données à émettre sur la liaison SL.

Selon l'invention, le circuit d'interface USBT2 comprend un circuit de détection DCT permettant au périphérique P de détecter qu'il est connecté par une liaison de type USB à un dispositif maître H.

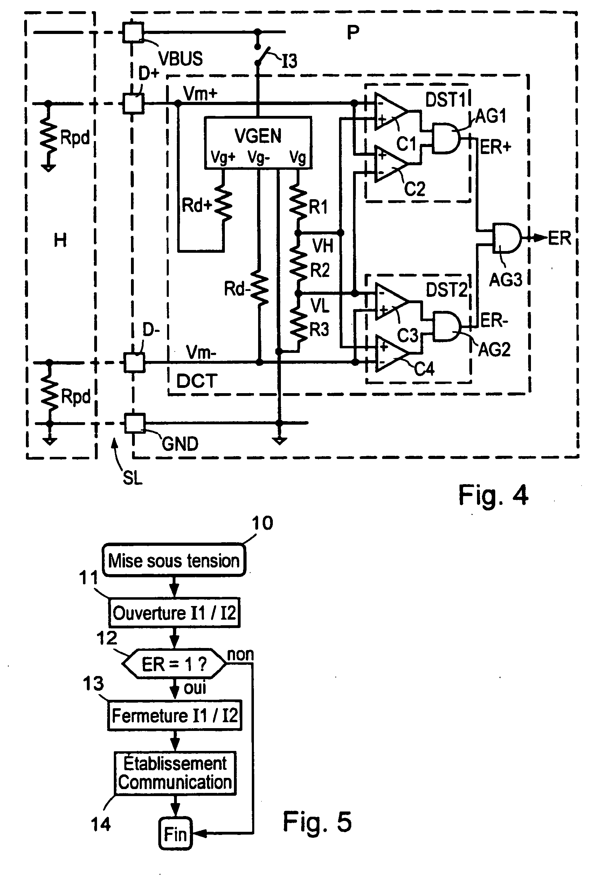

La figure 4 représente un mode de réalisation du circuit de détection DCT montré sur la figure 3. Le circuit de détection DCT comprend un générateur de tensions continues VGEN, alimenté par les bornes d'alimentation VBUS, GND du port USB. Le générateur de tension VGEN fournit une tension continue Vg+, au travers d'une résistance Rd+, à la borne de donnée positive D+ du port USB du périphérique. De même, le générateur de tension VGEN fournit une tension continue Vg- au travers d'une résistance Rd- à la borne de donnée négative D- du port USB.

Le générateur de tension VGEN applique ainsi aux bornes de donnée positive et négative des tensions de mesure Vm+ et Vm- de résistances Rpd éventuellement connectées par une liaison série SL aux bornes D+ et D-.

Le générateur de tension VGEN applique également une tension continue Vg à un groupe de trois résistances R1, R2, R3 montées en série, la résistance R1 étant connectée au générateur VGEN, et la résistance R3 étant connectée à la masse, c'est-à-dire à la borne de masse GND du port USB du périphérique P. Les résistances R1 et R2 forment un premier pont diviseur fournissant en leur noeud de jonction une tension de référence haute VH. De même, les résistances R2 et R3 forment un second pont diviseur fournissant en leur noeud de jonction une tension de référence basse VL.

Le circuit de détection DCT comprend en outre deux étages de détection DST1, DST2 comportant chacun deux comparateurs C1, C2, C3, C4 dont les sorties sont connectées aux entrées d'une porte ET AG1, AG2. Les sorties ER+, ER- des portes AG1, AG2 sont connectées aux entrées d'une autre porte ET AG3 dont la sortie fournit un signal de détection ER d'un dispositif maître.

La borne D+ est connectée à l'entrée négative du comparateur C1 et à l'entrée positive du comparateur C2. Par ailleurs, la tension de référence haute VH est appliquée à l'entrée positive du comparateur C1, et la tension de référence basse VL est appliquée à l'entrée négative du comparateur C2. De cette manière, la sortie de la porte AG1 est à l'état haut si la valeur de la tension de mesure Vm+ appliquée à la borne D+ est comprise entre les tensions de référence basse VL et haute VH, et à l'état bas dans le cas contraire.

De même, la borne D- est connectée à l'entrée négative du comparateur C4 et à l'entrée positive du comparateur C3. La tension de référence haute VH est appliquée à l'entrée positive du comparateur C4, et la tension de référence basse VL est appliquée à l'entrée négative du comparateur C3. La sortie de la porte AG2 est ainsi à l'état haut si la valeur de la tension de mesure Vm- appliquée à la borne D- est comprise entre les tensions de référence basse VL et haute VH, et à l'état bas dans le cas contraire.

Le signal de détection ER en sortie du circuit de détection est à l'état haut si les conditions suivantes sont simultanément réunies :

$$\text{VL} < \text{Vm+} < \text{VH} \tag{1}$$

$$\text{VL} < \text{Vm-} < \text{VH} \tag{2}$$

et à l'état bas dans le cas contraire.

Si des résistances de polarisation à l'état bas Rpd sont connectées aux lignes de donnée D+, D- de la liaison série SL, elles forment chacune avec la résistance Rd+, Rd- à laquelle elle est connectée, un pont diviseur de la tension Vg+, Vg-. La borne de donnée D+, D- connectée au noeud de jonction des résistances Rdp et Rd+ (ou Rdp et Rd-) fournit donc une tension de mesure Vm+, Vm- fonction de la valeur de la résistance Rpd connectée à la borne de donnée.

Si les résistances Rd+, Rd-, R1, R2, R3 sont toutes choisies sensiblement égales à une résistance R prédéfinie, et si les tensions Vg+, Vg- et Vg fournies par le générateur VGEN sont sensiblement égales, les conditions (1) et (2) sont équivalentes aux conditions suivantes :

$$1/3 < Rpd / (Rpd + R) < 2/3 \qquad (3)$$

ou encore :

$$R/2 < Rpd < 2R \qquad (4)$$

Si la valeur de la résistance R est choisie voisine de celle des résistances de polarisation à l'état bas, préconisée par la norme USB, soit 15 kOhms, et si des résistances de polarisation à l'état bas Rpd sont présentes sur la liaison USB connectée au périphérique P, les conditions (4) sont vérifiées pour chacune des bornes de donnée D+ et D-. Par contre, ces conditions ne sont pas vérifiées si les bornes de donnée D+ et D- ne sont pas connectées à un port USB d'un dispositif maître, c'est-à-dire si l'une et/ou l'autre des bornes D+ et D-du périphérique n'est pas connectée à une résistance de polarisation à l'état bas Rpd, ou est en court-circuit avec la masse.

Le circuit de détection DCT qui vient d'être décrit permet ainsi de détecter la présence de résistances de polarisation à l'état bas Rpd d'un dispositif maître H, connectées aux bornes de donnée positive D+ et négative D- du port USB du périphérique.

Par ailleurs, si les tensions continues Vg+, Vg- et Vg fournies par le générateur VGEN sont inférieures à 0,8 Volt, le circuit de détection qui vient d'être décrit vérifie la condition SE1 spécifiée dans la norme USB, qui impose que les tensions appliquées aux bornes D+ et D- ne doivent pas dépasser en même temps une tension Vose1 égale à 0,8 Volt.

La figure 5 illustre une procédure 10 de démarrage du périphérique P selon l'invention. A la mise sous tension du périphérique, le périphérique commande l'ouverture de l'interrupteur I1 ou I2 selon que la liaison USB du périphérique est à vitesse moyenne ou lente, pour déconnecter la résistance de polarisation à l'état haut Rpu (étape 11). A l'étape suivante 12, le périphérique teste le signal de sortie ER du circuit de détection DCT. Si le signal de sortie est à l'état haut, cela signifie que des résistances de polarisation à l'état bas Rpd d'un dispositif maître H sont reliées par la liaison SL aux bornes de données D+, D- du périphérique P. Dans ce cas, le périphérique ferme l'interrupteur I1 ou I2 (étape 13), et tente d'établir une communication par son port USB avec le dispositif maître ainsi détecté (étape 14).

Si à l'étape 12 le signal de détection ER est à l'état bas (ER = 0), cela signifie que le circuit de détection DCT n'a pas détecté sur chacune des bornes D+, D- la présence d'une résistance de polarisation à l'état bas Rpd ayant une valeur correcte (conditions (4) non satisfaites). La procédure 10 se termine alors sans que le périphérique tente d'établir une communication par son port série.

Le circuit de détection DCT peut également comprendre un interrupteur de désactivation I3 commandé par le périphérique P (figure 4). Cet interrupteur permet de désactiver le circuit de détection lorsque le périphérique P est sous tension et a détecté la présence d'un dispositif maître H.

L'interrupteur I3 est par exemple interposé sur une ligne d'alimentation du générateur de tension VGEN connectée à la borne d'alimentation VBUS du port série. L'interrupteur I3 est fermé à la mise sous tension du périphérique, et ouvert avant d'établir une communication avec le dispositif maître, à la suite de la détection de ce dernier.

Il apparaîtra clairement à l'homme de l'art que le dispositif selon l'invention est susceptible de diverses variantes. Ainsi, l'invention ne s'applique pas nécessairement à une liaison USB : elle s'applique plus généralement à toute liaison série reliant un dispositif maître à un dispositif esclave. En outre, l'impédance détectée n'est pas nécessairement une résistance de polarisation à l'état bas.

La détection d'impédance n'est pas nécessairement effectuée sur une ligne de transmission de donnée de la liaison série. Elle peut alternativement être effectuée sur une ligne d'alimentation de la liaison série.

Dans le cas d'une liaison série différentielle, il n'est pas nécessaire de détecter la présence d'une impédance sur chacune des bornes de donnée D+ et D-. Seule l'une de ces deux bornes peut faire l'objet de la détection effectuée par le circuit de détection. Dans ce cas, le générateur de tension VGEN ne génère qu'une seule tension de mesure Vm+ ou Vm-, et le circuit de détection DCT ne comporte qu'un étage de détection DST1 ou DST2.

Par ailleurs, il n'est pas nécessaire de comparer la tension de mesure Vm+, Vm- à une tension de référence haute et une tension de référence basse. Si l'on souhaite simplement détecter la présence ou l'absence d'une résistance, il suffit de comparer la tension de mesure à une tension de référence haute. Si l'on souhaite détecter qu'une borne du port série est reliée à la masse, il suffit de comparer la tension de mesure à une tension de référence basse.

## Revendications

**1.** Dispositif (P) comprenant un port série (D+, D-) pour se connecter en tant qu'esclave à un dispositif maître (H) par l'intermédiaire d'une liaison série (SL),
**caractérisé en ce qu'**il comprend un circuit de détection (DCT) pour détecter la présence d'une impédance (Rpd) d'un dispositif maître (H), reliée à une borne du port série (D+, D-), et des moyens pour établir une communication avec un dispositif maître uniquement si le circuit de détection détecte l'impédance.

2. Dispositif selon la revendication 1, dans lequel l'impédance détectée par le circuit de détection (DCT) est une résistance de polarisation à l'état bas (Rpd).

3. Dispositif selon l'une des revendications 1 et 2, dans lequel le circuit de détection (DCT) comprend un étage de polarisation (VGEN, Rd+, Rd-) pour générer une tension de mesure (Vm+, vm-) sur la borne (D+, D-) du port série, et un étage de détection (DST1, DST2) comprenant au moins un comparateur (C1-C4) pour comparer la tension de mesure à une tension de référence (VH, VL).

4. Dispositif selon la revendication 3, dans lequel l'étage de détection (DST1, DST2) comprend deux comparateurs (C1-C4) pour comparer la tension de mesure (Vm+, Vm-) à une tension de référence haute (VH) et à une tension de référence basse (VL) , et des moyens (AG1, AG2) pour générer un signal de détection (ER+, ER-) indiquant si la tension de mesure est ou non comprise entre les tensions de référence haute et basse.

5. Dispositif selon l'une des revendications 1 à 4, dans lequel le circuit de détection (DCT) comprend un premier étage de détection (DST1) d'une première résistance de polarisation à l'état bas (Rpd) d'un dispositif maître (H), reliée à une première borne (D+) du port série, et un second étage de détection (DST2) d'une seconde résistance de polarisation à l'état bas (Rpd) du dispositif maître (H), reliée à une seconde borne (D-) du port série.

6. Dispositif selon la revendication 5, dans lequel le circuit de détection (DCT) comprend un étage de polarisation (VGEN, Rd+, Rd-) pour générer une première tension de mesure (Vm+) sur la première borne (D+) du port série, et une seconde tension de mesure (Vm-) sur la seconde borne (D-) du port série, chaque étage de détection (DST1, DST2) comprenant au moins un comparateur (C1-C4) pour comparer la tension de mesure à une tension de référence (VH, VL).

7. Dispositif selon la revendication 6, dans lequel chaque tension de mesure (Vm+, Vm-) est inférieure à 0,8 Volt, même en l'absence de résistances de polarisation à l'état bas (Rpd) d'un dispositif maître (H), connectées aux bornes (D+, D-) du port série.

8. Dispositif selon l'une des revendications 6 et 7, dans lequel chaque étage de détection (DST1, DST2) comprend deux comparateurs (C1-C4) pour comparer la tension de mesure (Vm+, Vm-) à une tension de référence haute (VH) et à une tension de référence basse (VL), et des moyens (AG1, AG2) pour générer un signal de détection (ER+, ER-) indiquant si la tension de mesure est ou non comprise entre les tensions de référence haute et basse.

9. Dispositif selon l'une des revendications 6 à 8, dans lequel les première et seconde bornes (D+, D-) du port série sont dédiées à la transmission de données sous forme différentielle.

10. Dispositif selon l'une des revendications 1 à 9, dans lequel le circuit de détection (DCT) est désactivé à la suite de la détection d'un dispositif maître (H), et avant l'établissement d'une communication par la liaison série (SL).

11. Dispositif selon l'une des revendications 1 à 10, dans lequel le port série est de type Universal Serial Bus.

12. Procédé de connexion d'un dispositif (P) comprenant un port série (D+, D-) pour se connecter en tant qu'esclave à un dispositif maître (H) par l'intermédiaire d'une liaison série (SL),
**caractérisé en ce qu'**il comprend des étapes de détection de la présence d'une impédance (Rpd) d'un dispositif maître (H), reliée à une borne du port série (D+, D-), et d'établissement d'une communication avec un dispositif maître uniquement si le circuit de détection détecte l'impédance.

13. Procédé selon la revendication 12, comprenant des étapes de génération d'une tension de mesure (Vm+, Vm-) sur la borne (D+, D-) du port série, et de comparaison de la tension de mesure à une tension de référence (VH, VL).

14. Procédé selon la revendication 13, comprenant des étapes de comparaison de la tension de mesure (Vm+, Vm-) à une tension de référence haute (VH) et à une tension de référence basse (VL), et de génération d'un signal de détection (ER+, ER-) indiquant si la tension de mesure est ou non comprise entre les tensions de référence haute et basse.

**15.** Procédé selon l'une des revendications 12 à 14, comprenant des étapes de détection d'une première résistance de polarisation à l'état bas (Rpd) d'un dispositif maître (H), reliée à une première borne (D+) du port série, et de détection d'une seconde résistance de polarisation à l'état bas (Rpd) du dispositif maître (H), reliée à une seconde borne (D-) du port série.

**16.** Procédé selon la revendication 15, comprenant des étapes de génération d'une première tension de mesure (Vm+) sur la première borne (D+) du port série, et d'une seconde tension de mesure (Vm-) sur la seconde borne (D-) du port série, et de comparaison de la tension de mesure à une tension de référence (VH, VL).

**17.** Procédé selon l'une des revendications 15 et 16, comprenant une étape de génération d'un signal de détection (ER) indiquant si la présence d'une résistance de polarisation à l'état bas (Rpd) ayant une valeur comprise dans une plage de valeurs a été détectée.

**18.** Procédé selon l'une des revendications .15 à 17, comprenant des étapes de comparaison de la tension de mesure (Vm+, Vm-) à une tension de référence haute (VH) et à une tension de référence basse (VL), et de génération d'un signal de détection (ER+, ER-) indiquant si la tension de mesure est ou non comprise entre les tensions de référence haute et basse.

**19.** Procédé selon la revendication 18, comprenant une étape de désactivation du circuit de détection (DCT) à la suite de la détection d'un dispositif maître (H), et avant l'établissement d'une communication par la liaison série (SL).

**Claims**

**1.** Device (P) comprising a serial port (D+, D-) to connect as a slave to a master device (H) through a serial link (SL), **characterised in that** it comprises a detection circuit (DCT) to detect the presence of an impedance (Rpd) of a master device (H), linked to a terminal of the serial port (D+, D-), and means to establish a communication with a master device only if the detection circuit detects the impedance.

**2.** Device according to claim 1, wherein the impedance detected by the detection circuit (DCT) is a bias resistor in the low state (Rpd).

**3.** Device according to one of claims 1 and 2, wherein the detection circuit (DCT) comprises a bias stage (VGEN, Rd+, Rd-) to generate a measure voltage (Vm+, Vm-) on the terminal (D+, D-) of the serial port, and a detection stage (DST1, DST2) comprising at least one comparator (C1-C4) to compare the measure voltage to a reference voltage (VH, VL).

**4.** Device according to claim 3, wherein the detection stage (DST1, DST2) comprises two comparators (C1-C4) to compare the measure voltage (Vm+, Vm-) to a high reference voltage (VH) and a low reference voltage (VL), and means (AG1, AG2) to generate a detection signal (ER+, ER-) indicating whether the :measure voltage is comprised or not between the high and low reference voltages.

**5.** Device according to one of claims 1 to 4, wherein the detection circuit (DCT) comprises a first detection stage (DST1) of a first bias resistor in the low state (Rpd) of a master device (H), linked to a first terminal (D+) of the serial port, and a second detection stage (DST2) of a second bias resistor in the low state (Rpd) of the master device (H), linked to a second terminal (D-) of the serial port.

**6.** Device according to claim 5, wherein the detection circuit (DCT) comprises a bias stage (VGEN, Rd+, Rd-) to generate a first measure voltage (Vm+) on the first terminal (D+) of the serial port, and a second measure voltage (Vm-) on the second terminal (D-) of the serial port, each detection stage (DST1, DST2) comprising at least one comparator (C1-C4) to compare the measure voltage to a reference voltage (VH, VL).

**7.** Device according to claim 6, wherein each measure voltage (Vm+, Vm-) is lower than 0.8 Volt, even in the absence of bias resistors in the low state (Rpd) of a master device (H), connected to the terminals (D+, D-) of the serial port.

**8.** Device according to one of claims 6 and 7, wherein each detection stage (DST1, DST2) comprises two comparators

7

(C1-C4) to compare the measure voltage (Vm+, Vm-) to a high reference voltage (VH) and to a low reference voltage (VL), and means (AG1, AG2) to generate a detection signal (ER+, ER-) indicating whether the measure voltage is comprised or not between the high and low reference voltages.

9. Device according to one of claims 6 to 8, wherein the first and second terminals (D+, D-) of the serial port are dedicated to the transmission of data in differential form.

10. Device according to one of claims 1 to 9, wherein the detection circuit (DCT) is deactivated after the detection of a master device (H), and before establishing a communication through the serial link (SL).

11. Device according to one of claims 1 to 10, wherein the serial port is of the Universal Serial Bus type.

12. Method for connecting a device (P) comprising a serial port (D+, D-) to connect as a slave to a master device (H) through a serial link (SL),
characterised in that it comprises detecting the presence of an impedance (Rpd) of a master device (H), linked to a terminal of the serial port (D+, D-), and establishing a communication with a master device only if the detection circuit detects the impedance.

13. Method according to claim 12, comprising generating a measure voltage (Vm+, Vm-) on the terminal (D+, D-) of the serial port, and comparing the measure voltage to a reference voltage (VH, VL).

14. Method according to claim 13, comprising comparing the measure voltage (Vm+, Vm-) to a high reference voltage (VH) and to a low reference voltage (VL), and generating a detection signal (ER+, ER-) indicating whether the measure voltage is comprised or not between the high and low reference voltages.

15. Method according to one of claims 12 to 14, comprising detecting a first bias resistor in the low state (Rpd) of a master device (H), linked to a first terminal (D+) of the serial port, and detecting a second bias resistor in the low state (Rpd) of the master device (H), linked to a second terminal (D-) of the serial port.

16. Method according to claim 15, comprising generating a first measure voltage (Vm+) on the first terminal (D+) of the serial port, and a second measure voltage (Vm-) on the second terminal (D-) of the serial port, and comparing the measure voltage to a reference voltage (VH, VL).

17. Method according to one of claims 15 and 16, comprising generating a detection signal (ER) indicating if the presence of a bias resistor in the low state (Rpd) having a value comprised in a range of values has been detected.

18. Method according to one of claims 15 to 17, comprising comparing the measure voltage (Vm+, Vm-) to a high reference voltage (VH) and a low reference voltage (VL), and generating a detection signal (ER+, ER-) indicating whether the measure voltage is comprised or not between the high and low reference voltages.

19. Device according to one claim 18, comprising deactivating the detection circuit (DCT) after the detection of a master device (H), and before establishing a communication through the serial link (SL).

**Patentansprüche**

1. Vorrichtung (P), die eine serielle Schnittstelle (D+, D-) aufweist, um sich als Slave an eine Mastervorrichtung (H) über eine serielle Verbindung (SL) anzuschließen,
dadurch gekennzeichnet, dass sie eine Erfassungsschaltung (DCT) zum Erfassen der Gegenwart einer Impedanz (Rpd) einer Mastervorrichtung (H), die an eine Klemme der seriellen Schnittstelle (D+, D-) angeschlossen ist, aufweist, und Mittel zum Erstellen einer Kommunikation zwischen einer Mastervorrichtung nur, wenn die Erfassungsschaltung die Impedanz erfasst.

2. Vorrichtung nach Anspruch 1, bei der die von der Erfassungsschaltung (DCT) erfasste Impedanz ein Polarisierungswiderstand im niedrigen Zustand (Rpd) ist.

3. Vorrichtung nach einem der Ansprüche 1 und 2, bei der die Erfassungsschaltung (DCT) eine Polarisierungsstufe (VGEN, Rd+, Rd-) aufweist, um eine Messspannung (Vm+, Vm-) auf der Klemme (D+, D-) der seriellen Schnittstelle zu erzeugen, und eine Erfassungsstufe (DST1, DST2), die mindestens einen Komparator (C1-C4) aufweist, um die Messspannung mit einer Referenzspannung (VH, VL) zu vergleichen.

4.  Vorrichtung nach Anspruch 3, bei der die Erfassungsstufe (DST1, DST2) zwei Komparatoren (C1-C4) aufweist, um die Messspannung (Vm+, Vm-) mit einer hohen Referenzspannung (VH) und mit einer niedrigen Referenzspannung (VL) zu vergleichen, sowie Mittel (AG1, AG2), um ein Erfassungssignal (ER+, ER-) zu erzeugen, das anzeigt, ob die Messspannung zwischen der hohen und der niedrigen Referenzspannung liegt oder nicht.

5.  Vorrichtung nach einem der Ansprüche 1 bis 4, bei der die Erfassungsschaltung (DCT) eine erste Erfassungsstufe (DST1) eines ersten Polarisierungswiderstands im niedrigen Zustand (Rpd) einer Mastervorrichtung (H), die an eine erste Klemme (D+) der seriellen Schnittstelle angeschlossen ist, und eine zweite Erfassungsstufe (DST2) eines zweiten Polarisierungswiderstands im niedrigen Zustand (Rpd) der Mastervorrichtung (H), die an eine zweite Klemme (D-) der seriellen Schnittstelle angeschlossen ist, aufweist.

6.  Vorrichtung nach Anspruch 5, bei der die Erfassungsschaltung (DCT) eine Polarisierungsstufe (VGEN, Rd+, Rd-) aufweist, um eine erste Messspannung (Vm+) auf der ersten Klemme (D+) der seriellen Schnittstelle zu erzeugen, und eine zweite Messspannung (Vm-) auf der zweiten Klemme (D-) der seriellen Schnittstelle, wobei jede Erfassungsstufe (DST1, DST2) mindestens einen Komparator (C1-C4) aufweist, um die Messspannung mit einer Referenzspannung (VH, VL) zu vergleichen.

7.  Vorrichtung nach Anspruch 6, bei der jede Messspannung (Vm+, Vm-) kleiner ist als 0,8 Volt, sogar bei Fehlen von Polarisierungswiderständen im niedrigen Zustand (Rpd) einer Mastervorrichtung (H), die an die Klemmen (D+, D-) der seriellen Schnittstelle angeschlossen sind.

8.  Vorrichtung nach einem der Ansprüche 6 und 7, bei der jede Erfassungsstufe (DST1, DST2) zwei Komparatoren (C1-C4) aufweist, um die Messspannung (Vm+, Vm-) mit einer hohen Referenzspannung (VH) und einer niedrigen Referenzspannung (VL) zu vergleichen, und Mittel (AG1, AG2), um ein Erfassungssignal (ER+, ER-) zu erzeugen, das anzeigt, ob die Messspannung zwischen der hohen und der niedrigen Referenzspannung liegt oder nicht.

9.  Vorrichtung nach einem der Ansprüche 6 bis 8, bei der die erste und die zweite Klemme (D+, D-) der seriellen Schnittstelle für das Übertragen von Daten in differenzieller Form dediziert sind.

10. Vorrichtung nach einem der Ansprüche 1 bis 9, bei der die Erfassungsschaltung (DCT) im Anschluss an das Erfassen einer Mastervorrichtung (H) und vor dem Erstellen einer Kommunikation durch serielle Verbindung (SL) deaktiviert wird.

11. Vorrichtung nach einem der Ansprüche 1 bis 10, bei der die serielle Schnittstelle des Typs Universal Serial Bus ist.

12. Verfahren zum Verbinden einer Vorrichtung (P), die eine serielle Schnittstelle (D+, D-) aufweist, um sich als Slave an eine Mastervorrichtung (H) über eine serielle Verbindung (SL) anzuschließen, **dadurch gekennzeichnet, dass** es Schritte zum Erfassen der Gegenwart einer Impedanz (Rpd) einer Mastervorrichtung (H), die an eine Klemme der seriellen Schnittstelle (D+, D-) angeschlossen ist, aufweist, und zum Erstellen einer Kommunikation mit einer Mastervorrichtung nur, wenn die Erfassungsschaltung die Impedanz erfasst.

13. Verfahren nach Anspruch 12, das Schritte zum Erzeugen einer Messspannung (Vm+, Vm-) auf der Klemme (D+, D-) der seriellen Schnittstelle aufweist, und zum Vergleichen der Messspannung mit einer Referenzspannung (VH, VL).

14. Verfahren nach Anspruch 13, das Schritte zum Vergleichen der Messspannung (Vm+, Vm-) mit einer hohen Referenzspannung (VH) und einer niedrigen Referenzspannung (VL) aufweist, und zum Erzeugen eines Erfassungssignals (ER+, ER-), das anzeigt, ob die Messspannung zwischen der hohen Referenzspannung und der niedrigen Referenzspannung liegt oder nicht.

15. Verfahren nach einem der Ansprüche 12 bis 14, das Schritte zum Erfassen eines ersten Polarisierungswiderstands im niedrigen Zustand (Rdp) einer Mastervorrichtung (H) aufweist, die mit einer ersten Klemme (D+) der seriellen Schnittstelle verbunden ist, und zum Erfassen eines zweiten Polarisierungswiderstands im niedrigen Zustand (Rpd) der Mastervorrichtung (H), die mit einer zweiten Klemme (D-) der seriellen Schnittstelle verbunden ist.

**16.** Verfahren nach Anspruch 15, das Schritte zum Erzeugen einer ersten Messspannung (Vm+) auf der ersten Klemme (D+) der seriellen Schnittstelle aufweist, und einer zweiten Messspannung (Vm-) auf der zweiten Klemme (D-) der seriellen Schnittstelle und zum Vergleichen der Messspannung mit einer Referenzspannung (VH, VL).

**17.** Verfahren nach einem der Ansprüche 15 und 16, das einen Schritt des Erzeugens eines Erfassungssignals (ER) aufweist, das anzeigt, ob die Gegenwart eines Polarisierungswiderstands im niedrigen Zustand (Rpd), die einen Wert hat, der in einem Wertebereich enthalten ist, erfasst wurde.

**18.** Verfahren nach einem der Ansprüche 15 bis 17, das Schritte zum Vergleichen der Messspannung (Vm+, Vm-) mit einer hohen Referenzspannung (VH) und einer niedrigen Referenzspannung (VL) und zum Erzeugen eines Erfassungssignals (ER+, ER-) aufweist, das anzeigt, ob die Messspannung zwischen dem hohen und dem niedrigen Referenzwert enthalten ist oder nicht.

**19.** Verfahren nach Anspruch 18, das einen Schritt des Deaktivierens der Erfassungsschaltung (DCT) in Folge des Erfassens einer Mastervorrichtung (H) und vor dem Erstellen einer Kommunikation durch die serielle Verbindung (SL) aufweist.

## Fig. 1

## Fig. 2

## Fig. 3

Fig. 4

Fig. 5

**EP 1 758 029 B1**

**Documents brevets cités dans la description**

- US 20020169915 A